# EUROPÄISCHE PATENTSCHRIFT

(11) **EP 3 322 584 B1**
(45) Veröffentlichungstag und Bekanntmachung des Hinweises auf die Patenterteilung: **04.09.2019**
(21) Anmeldenummer: 16745641.7
(22) Anmeldetag: 14.07.2016
(51) Int. Cl.: B29C 70/84, A43B 5/14, B29C 69/00, B32B 3/12, B62J 1/00, B62K 19/16, B29C 70/54, B29C 70/68, B29C 70/12, B29C 70/18, B29C 51/14, B29C 45/14

(54) **BAUTEIL AUS EINEM VERBUNDWERKSTOFF SOWIE VERFAHREN ZU DESSEN HERSTELLUNG**
COMPOSITE MATERIAL COMPONENT, AND METHOD FOR THE PRODUCTION THEREOF
PIÈCE CONSTITUÉE D'UN MATÉRIAU COMPOSITE ET SON PROCÉDÉ DE FABRICATION

(30) Priorität: 16.07.2015 DE 102015111537
(43) Veröffentlichungstag der Anmeldung: 23.05.2018
(73) Patentinhaber: MPR GmbH & Co. KG, 95615 Marktredwitz (DE)
(72) Erfinder: PÜRNER, Marcus, 95615 Marktredwitz (DE); DIWISCH, Christoph, 95163 Weissenstadt (DE)
(74) Vertreter: Friderichs, Gunther
(86) Internationale Anmeldenummer: PCT/EP2016/066782
(87) Internationale Veröffentlichungsnummer: WO 2017/009423

(56) Entgegenhaltungen:
- EP-A1- 1 604 797
- DE-U1-202008 012 572
- FR-A1- 3 006 231
- US-A1- 2006 234 028

## Beschreibung

### Gebiet der Erfindung

Die Erfindung betrifft ein Verfahren zum Herstellen eines Bauteils aus einem Verbundwerkstoff. Insbesondere betrifft diese Offenbarung die Herstellung von Bauteilen für Zubehör für Fahrräder, wie Sättel und Fahrradschuhe, sowie von Fahrradkomponenten, insbesondere von Rahmen.

### Hintergrund der Erfindung

Zur Bereitstellung von Leichtgewichtsstrukturen für Fahrräder haben sich in der Praxis vor allem faserverstärkte Verbundwerkstoffe, insbesondere kohlefaserverstärkte Verbundwerkstoffe, durchgesetzt. Insbesondere werden Fahrradrahmen aus kohlefaserverstärkten Kunststoffen hergestellt.

Die Herstellung ist aufwendig, insbesondere wegen der langen Prozesszeiten beim Backen der Bauteile in einem Ofen. Auch sind in der Regel aufwendige Nachbearbeitungsschritte, wie Schleifen und Polieren von Kanten erforderlich.

Da aber eine besonders leichte Bauweise bei Fahrrädern eine große Rolle spielt, werden die damit verbundenen Nachteile in Kauf genommen.

### Aufgabe der Erfindung

Der Erfindung liegt demgegenüber die Aufgabe zugrunde, Bauteile mit einem geringen Gewicht aus einem Faserverbundwerkstoff einfacher herzustellen. Insbesondere soll eine Serienfertigung in großen Stückzahlen vereinfacht werden.

Des Weiterer soll eine möglichst große Formenvielfalt möglich sein, so dass die Bauteile insbesondere auch für Fahrradzubehörteile, wie Sättel und Fahrradschuhe, geeignet sein sollen.

Das Dokument US 2006/234028 A1 zeigt eine Honeycomb-Struktur oder ein Schaum, wenn ein Gewebe eingebettet wird. Das Dokument FR 3 006 231 A1 zeigt eine Rippen umfassende Struktur zur Verwendung im Automobilbereich. Das Dokument DE 20 2008 012 572 U1 zeigt ein Sandwichaufbau mit einer Wabenstruktur. Das Dokument EP 1 604 797 A1 zeigt hinterspritzte Kunststoffteile.

### Zusammenfassung der Erfindung

Die Aufgabe der Erfindung wird bereits durch ein Verfahren zum Herstellen eines Bauteils aus einem Verbundwerkstoff nach Anspruch 1 gelöst.

Bevorzugte Ausführungsformen und Weiterbildungen der Erfindung sind dem Gegenstand der jeweiligen Unteransprüche zu entnehmen.

Die Erfindung betrifft ein Verfahren zum Herstellen eines Bauteils aus einem Verbundwerkstoff. Insbesondere sollen Teile eines Fahrrads oder eines Zubehörteils eines Fahrrads gefertigt werden.

Das Bauteil wird insbesondere als Basis für einen Sattel oder als Teil der Sohle eines Fahrradschuhs verwendet.

Zunächst wird eine Hohlkammer umfassende Leichtgewichtsstruktur bereitgestellt. Es ist insbesondere vorgesehen, dass eine Wabenplatte, insbesondere eine Wabenplatte aus Kunststoff, verwendet wird. Derartige auch als Honeycomb bezeichnete Bauteile sind als Platten verfügbar. Sandwichplatten mit einem Wabenkern bestehen insbesondere aus Polyamid, Polypropylen oder Polycarbonat und können ggf. auch bereits mit Fasern, insbesondere mit Glas- oder Kohlefasern, verstärkt sein. Vorzugsweise werden auch Sandwichplatten aus Polyamid verwendet. Diese weisen eine hohe Festigkeit auf.

Auf die Leichtgewichtsstruktur, welche insbesondere als Platte ausgebildet ist, wird auf zumindest eine Seite, vorzugsweise auf beide Seiten eine Mehrzahl von Lagen einer vorimprägnierten Faserverbundmatte aufgelegt.

Unter einer vorimprägnierten Faserverbundmatte wird ein Gewebe oder ein Vlies verstanden, welches insbesondere aus Kohlefasern oder aus Glasfasern besteht.

Durch eine Vorimprägnierung wird erreicht, dass die Faserverbundmatten miteinander, aber gleichzeitig auch mit der Leichtgewichtsstruktur verbunden werden können.

Gemäß der Erfindung, wird eine thermoplastische Imprägnierung verwendet. Diese wird mithin unter Wärmeeinwirkung flüssig. Es versteht sich, dass eine derartige Imprägnierung auch als feste Beschichtung oder als zusätzliche Lage, insbesondere als Folie, vorhanden sein kann.

Der Verbund aus Leichtgewichtsstruktur und Faserverbundmatten wird gepresst, insbesondere kalandriert. Dies erfolgt insbesondere unter Wärmeeinwirkung.

Es erfolgt das Verpressen unter Wärmeeinwirkung, so dass die Imprägnierung aufschmilzt und Faserverbundmatten und Leichtgewichtsstruktur miteinander verbindet.

Der Vorteil bei der Verwendung thermoplastischer Imprägnierungen liegt vor allem in schnelleren Prozesszeiten. Zum Verbinden der Faserverbundmatten muss das Bauteil lediglich über T_{g} erwärmt werden und anschließend auf Raumtemperatur abgekühlt werden, was wesentlich schneller erfolgt als das Vernetzen eines Duroplasten, wie beispielsweise eines Epoxidharzes.

Als thermoplastische Imprägnierung bzw. thermoplastisches Prepreg können insbesondere Polypropylen oder Polyamide verwendet werden, insbesondere PA6, PA12 oder PA6.6, sowie PEEK, POM, PVC, PPS sowie die Gruppe der thermoplastischen Elastomere (Styrenic block copolymers, TPE-s),Polyolefin blends (TPE-o), Thermoplastic polyurethanes (TPU), Thermoplastic copolyester oder Thermoplastic polyamides.

Die Imprägnierung mit einem Thermoplast kann zum Beispiel dadurch erfolgen, dass die einzelnen Fasern mit einem Thermoplast beschichtet werden, etwa durch Eintauchen oder durch Extrusion. Die so mit dem Thermoplast umhüllten Fasern werden sodann zu einem Gewebe verarbeitet.

Eine weitere Möglichkeit ist die Verwendung einer Folie aus einem thermoplastischen Material, welche mit der Faserverbundmatte verbunden wird, beispielsweise durch Kalandrieren. Das so hergestellte Verbundmaterial wird als mit einem Thermoplasten imprägnierte Fasermatte verwendet.

Aus dem so entstandenen plattenförmigen Verbundmaterial wird ein Halbzeug ausgeschnitten, insbesondere ausgestanzt. In einem Schritt erfolgt mithin zunächst eine Formgebung über ein Heraustrennen des Halbzeugs aus dem entstandenen Verbundwerkstoff.

Sodann wird das Halbzeug unter Wärmeeinwirkung tiefgezogen. Es versteht sich, dass hierfür eine thermoplastische Leichtgewichtsstruktur verwendet wird.

Die Leichtgewichtsstruktur wird verformt und durch den abkühlten Thermoplast in Form gehalten. Das so hergestellte Halbzeug steht unter Vorspannung, was genutzt werden kann, um dessen mechanische Stabilität zu verbessern.

Aus der Platte kann so ein nahezu beliebig geformter Körper geformt werden, welcher allerdings im Regelfall eine im Wesentlichen gleichbleibende Schichtdicke aufweist.

Sodann wird das Halbzeug mit einem Thermoplasten hinterspritzt werden. Hierdurch lässt sich ein dreidimensionaler Gegenstand mit nahezu beliebiger Form erzeugen, bei welchem die mit den Fasermatten versehene Leichtgewichtsstruktur den Kern des Bauteils bildet.

Das Bauteil kann beispielsweise ganz oder teilweise umspritzt werden. Im Falle eines Sattels ist insbesondere denkbar, Befestigungsaufnahmen durch Hinterspritzen zu erzeugen.

Es können dabei auch die Kanten des Halbzeugs hinterspritzt werden. Dies hat den Vorteil, dass auf ein Schleifen oder Polieren der Kanten verzichtet werden kann.

Das Halbzeug kann vielmehr mit unbearbeiteten und/oder ungesäumten Kanten verwendet werden, um das Bauteil herzustellen.

Das Hinterspritzen des Halbzeugs erfolgt in einem Werkzeug, welches vorher für das Umformen des Halbzeugs verwendet wurde. Insbesondere kann das Hinterspritzen in der Tiefziehform erfolgen.

Bei einer Ausführungsform der Erfindung werden durch das Hinterspritzen mit einem Thermoplast ein erstes und ein zweites Bauteil zumindest abschnittsweise miteinander verbunden.

Es ist insbesondere denkbar, das Bauteil, welches erfindungsgemäß hergestellt wird, nur in Bereichen zu verwenden, die gegenüber angrenzenden Bereichen einer erhöhten mechanischen Belastung ausgesetzt sind.

So ist beispielsweise im Falle eines Sattels denkbar, die Bereiche, auf welchen der Fahrer mit seinen Sitzbeinhöckern aufliegt, durch zumindest ein erfindungsgemäßes Bauteil zu verstärken, den dazwischen liegenden Bereich aber nur aus einem Thermoplast auszugestalten.

Es ist auch insbesondere denkbar, das Bauteil für einen Sattel im Wesentlichen V-förmig auszugestalten, so dass dieses zur Sattelspitze hin zusammenläuft, dort den vorderen Teil des Sattels verstärkt und im hinteren Bereich ganz oder Teilweise mittels einer Thermoplast überspannt wird.

Weiter ist auch denkbar, das Halbzeug im Anschluss in dem Werkzeug, insbesondere in dem Tiefziehwerkzeug, zu lackieren.

Die Erfindung betrifft ferner ein verfahrensgemäß hergestelltes Bauteil.

Das Bauteil wird insbesondere als Teil eines Fahrradsattels, eines Fahrradrahmens oder eines Fahrradschuhs verwendet.

Das Bauteil umfasst in einer bevorzugten Ausführungsform einen Kern aus einer Leichtgewichtsstruktur mit Hohlkammern, welcher durch eine Mehrzahl imprägnierter und miteinander verbundener Fasermatten verstärkt ist. Um diesen Kern herum ist das Bauteil, vorzugsweise zumindest abschnittweise, mit einem Thermoplasten umspritzt.

Vorzugsweise umfasst das Bauteil auf beiden Seiten der Leichtgewichtsstruktur zumindest zwei, besonders bevorzugt zumindest drei, Fasermatten.

Die Fasermatten sind vorzugsweise in unterschiedlicher Orientierung zueinander angeordnet, es ist insbesondere vorgesehen, die einzelnen Matten in einem Winkel von 50-60° verdreht zueinander anzuordnen. Dies erhöht ebenfalls die Steifigkeit des Bauteils.

Die Offenbarung betrifft insbesondere einen Fahrradsattel mit einem vorstehend beschriebenen Bauteil.

Vorzugsweise erstreckt sich das Bauteil von einem vorderen Bereich des Sattels ausgehend gabelförmig zu einem hinteren Bereich, auf welchem die Sitzbeinhöcker des Fahrers ruhen. So kann ein sehr leichter aber dennoch stabiler Sattel bereitgestellt werden.

Das gabelförmige Bauteil wir vorzugsweise zumindest abschnittsweise von einem Thermoplast überspannt.

Die Offenbarung betrifft des Weiteren einen Schuh, insbesondere einen Fahrradschuh, welcher ein zuvor beschriebenes Bauteil aus einem Verbundwerkstoff umfasst.

Bei einer bevorzugten Ausführungsform befindet sich das Bauteil zwischen einem Vorderfußbereich und einem Fersenbereich.

Das Bauteil verstärkt insbesondere den Bereich der Schuhsohle, in welchem sich diese verschmälert, insbesondere im Bereich des Quergewölbes des Fußes.

Die Sohle umfasst vorzugsweise das Bauteil aus dem Verbundwerkstoff, welches mit einem Thermoplast umspritzt ist, der zumindest abschnittweise die restliche Sohle bildet.

Das Bauteil hat insbesondere eine Form, welche sich vom Vorderfußbereich ausgehend nach hinten verschmälert.

Durch das erfindungsgemäße Bauteil kann das Gewicht, insbesondere eines Fahrradschuhs, reduziert werden. Gleichzeitig ist die Sohle gegenüber Torsionen, insbesondere im mittleren Bereich, versteift. Dies ist insbesondere vorteilhaft bei Fahrradschuhen, welche an den Pedalen befestigbar sind.

### Kurzbeschreibung der Zeichnungen

Die Erfindung soll im Folgenden bezugnehmend auf die Zeichnungen Fig. 1 bis Fig. 12 näher erläutert werden.

Bezugnehmend auf die schematischen Zeichnungen Fig. 1 bis Fig. 5 soll die Herstellung eines Bauteils, hier in Form eines Fahrradsattels, näher erläutert werden.

Fig. 6 zeigt in einem Flussdiagramm ein Ausführungsbeispiel eines Verfahrens zur Herstellung eines Bauteils.

Fig. 7 und Fig. 8 zeigen Ansichten eines Ausführungsbeispiels eines besonders leichten Fahrradsattels.

Fig. 9 und Fig. 10 zeigen Schnittansichten des in Fig. 7 und Fig. 8 gezeigten Sattels.

Fig. 11 zeigt das für den in Fig. 9 und 10 dargestellten Sattel verwendete Bauteil aus einem Verbundwerkstoff.

Fig. 12 zeigt einen Fahrradschuh mit einem Bauteil.

### Detaillierte Beschreibung der Zeichnungen

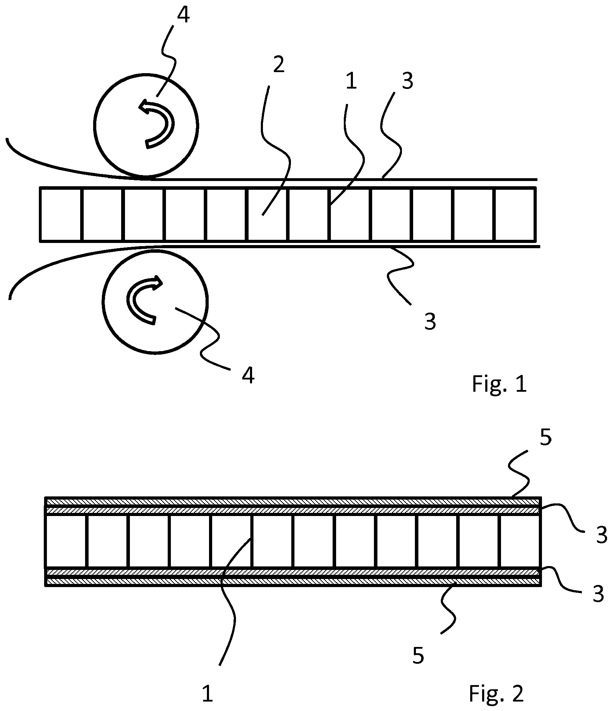

Fig. 1 zeigt in einer schematischen Seitenansicht, wie in einem ersten Verfahrensschritt eine Leichtgewichtsstruktur 1, die eine Vielzahl von Hohlkammern 2 umfasst, mit einer Faserverbundmatte 3 versehen wird.

Die Faserverbundmatte 3 wird dabei sowohl auf die Oberseite als auch auf die Unterseite der Leichtgewichtsstruktur 1 aufgebracht.

Hierfür werden beheizte Walzen 4 verwendet, die Faserverbundmatte 3 wird mithin durch Kalandrieren aufgebracht.

Es wird in diesem Ausführungsbeispiel eine Faserverbundmatte 3 verwendet, welche mit einem Thermoplast imprägniert ist. Über die Walzen 4 wird der Thermoplast über T_{g} erwärmt und die Faserverbundmatte 3 verbindet sich mit der Leichtgewichtsstruktur. Es versteht sich, dass vorzugsweise mehrere Faserverbundmatten als Lagen übereinander aufgebracht werden (nicht dargestellt).

Fig. 2 zeigt in einer schematischen Seitenansicht ein so hergestelltes Material.

Dieses besteht aus einem Kern aus der Leichtgewichtsstruktur 1 sowie jeweils aus zwei Faserverbundmatten 3, 5.

Die Faserverbundmatten 3, 5 werden vorzugsweise derart aufgebracht, dass diese eine unterschiedliche Orientierung aufweisen, mithin die Fasern der einzelnen Lagen quer zueinander stehen, insbesondere in einem Winkel von etwa 45°.

Für die Faserverbundmatten können insbesondere STC (Spread Tow Carbon)-Gewebe verwendet werden.

Als oberste Lage kann beispielsweise auch UD-Carbon verwendet werden, also eine Fasermatte, bei welcher die Fasern in eine einzige Richtung orientiert sind.

Aufgrund der Verwendung eines Thermoplasten braucht der so hergestellte Verbundwerkstoff nach dem Kalandrieren nur abzukühlen und steht sodann sofort für eine weitere Verarbeitung bereit.

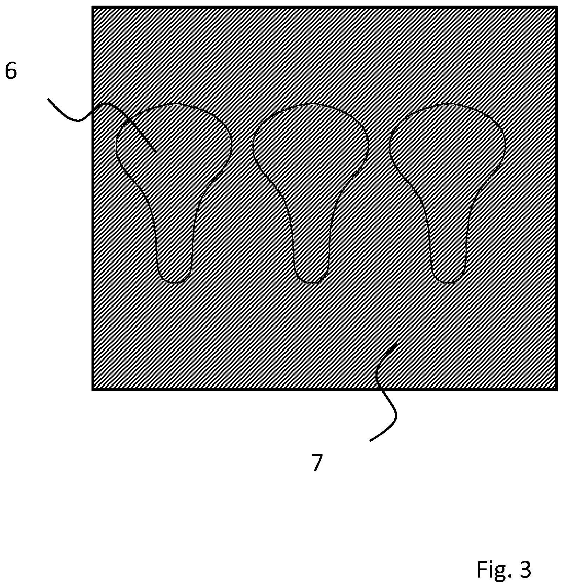

Wie bezugnehmend auf Fig. 3 dargestellt ist, können aus dem entstandenen Verbundwerkstoff 7 Halbzeuge 6, hier in Form eines Fahrradsattels, ausgestanzt werden.

Auch das Halbzeug 6 ist dabei zunächst als nicht gekrümmte Platte ausgebildet.

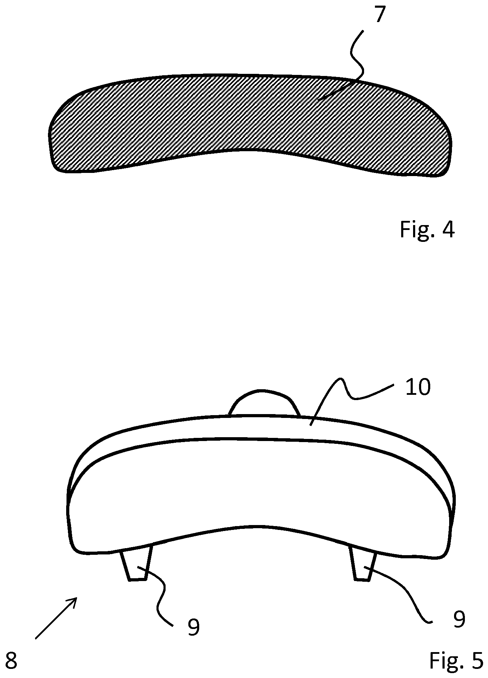

Wie schematisch in Fig. 4 dargestellt, kann der ausgestanzte Verbundwerkstoff 7 sodann in heißem Zustand verformt werden.

Hierzu kann beispielsweise ein Tiefziehwerkzeug mit beheizten Schalen (nicht dargestellt) verwendet werden.

Es entsteht so aus der Platte ein gekrümmter Körper mit nahezu einer beliebigen Form.

Wie schematisch in Fig. 5 dargestellt, kann aus dem Halbzeug ein Sattel 8 hergestellt werden, indem das Halbzeug mit einem Thermoplasten hinterspritzt wird.

So können beispielsweise, wie hier dargestellt, Haltepunkte 9 durch Hinterspritzen angebracht werden.

Vorzugsweise werden auch die ausgestanzten Kanten des Halbzeugs hinterspritzt, so dass auf eine Bearbeitung der Kanten verzichtet werden kann.

In diesem Ausführungsbeispiel ist auf die Oberseite noch ein Bezug 10 aufgebracht.

Es wurde auf sehr einfache Weise ein hochfester Leichtbausattel hergestellt.

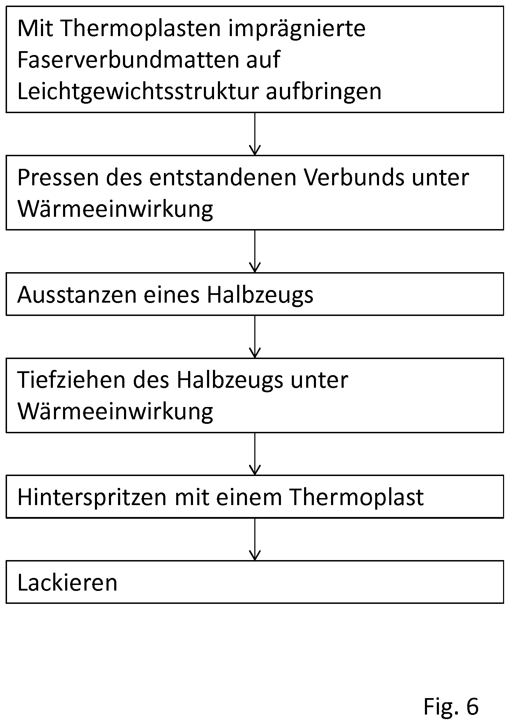

Fig. 6 zeigt ein Flussdiagramm mit beispielhaften Verfahrensschritten. Zunächst werden mit Thermoplasten imprägnierte Faserverbundmatten auf eine Leichtgewichtsstruktur aufgebracht.

Sodann wird der entstandene Verbund unter Wärmeeinwirkung gepresst und sodann aus dem plattenförmigen Verbundwerkstoff Halbzeuge ausgestanzt.

Das Halbzeug wird unter Wärmeeinwirkung tiefgezogen und vorzugsweise in derselben Form mit einem Thermoplasten hinterspritzt.

Anschließend kann das so entstandene Bauteil noch lackiert werden.

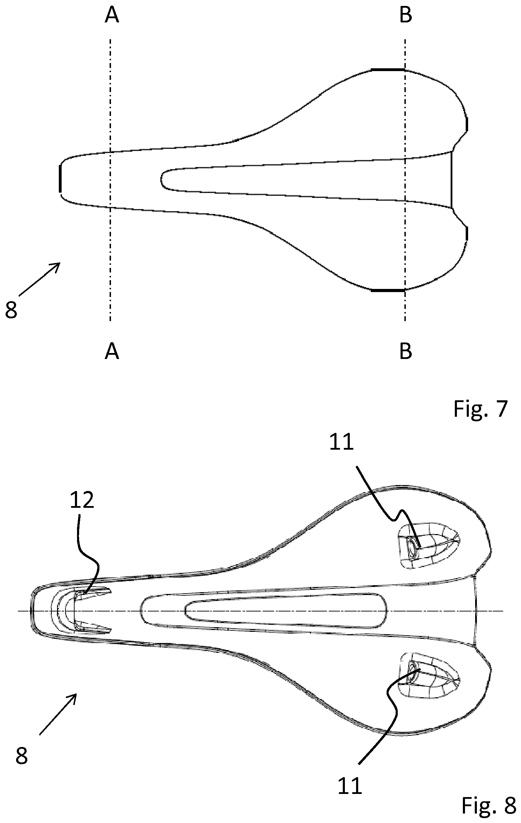

Fig. 7 zeigt eine Draufsicht auf ein Ausführungsbeispiels eines Sattels 8.

Der Sattel 8 ist im hinteren Bereich in zwei erhobene Bereiche unterteilt, welche als Stützflächen für die Sitzbeinhöcker des Fahrers dienen.

Fig. 8 zeigt eine Draufsicht auf die Unterseite des in Fig. 7 gezeigten Sattels.

Auf der Unterseite des Sattels sind hintere Halteraufnahmen 11 sowie eine vordere Halteraufnahme 12 vorgesehen. Über die Halteraufnahmen 11, 12 kann der Sattel auf entsprechend passend geformte Stangen aufgesetzt und mittels der Stangen an der Sattelstütze befestigt werden.

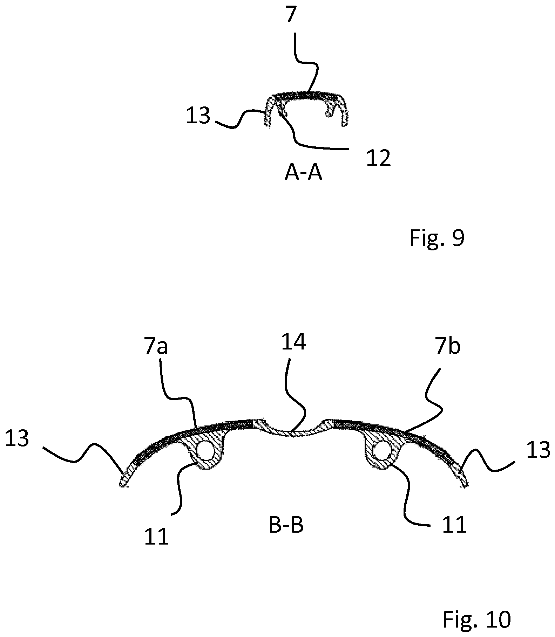

Fig. 9 zeigt eine Schnittansicht des in Fig. 7 gezeigten Sattels entlang der Schnittlinie A-A.

Zu erkennen ist ein randseitiger Bereich aus einem Thermoplast 13, zu welchem auch die vordere Halteraufnahme 12 gehört.

Ein mittlerer Bereich wird durch den vorstehend beschriebenen Verbundwerkstoff 7 gebildet.

Der Bereich 7 besteht mithin aus einer Hohlkammer umfassenden Leichtgewichtsstruktur, welche zwischen mehreren Lagen von Faserverbundmatten eingebettet ist.

Fig. 10 zeigt eine Schnittansicht entlang B-B in Fig. 7.

Zu erkennen ist, dass die Bereiche aus einem Verbundwerkstoff 7a, 7b nunmehr in zwei Bereiche unterteilt sind. Die Bereiche aus dem Verbundwerkstoff 7a, 7b dienen als Stützflächen für die Sitzbeinhöcker.

Bereiche aus Verbundwerkstoff 7a, 7b sind über einen mittleren Abschnitt aus einem Thermoplast 14 miteinander verbunden.

Auch randseitig sind die Bereiche 7a, 7b mit einem Thermoplast 13 hinterspritzt. Die hinteren Halteraufnahmen werden ebenfalls aus einem angespritzten Thermoplast 11 gebildet.

Im hinteren Bereich des Sattels treten im mittleren Bereich, also insbesondere in dem Bereich, welcher aus einem Thermoplast 14 besteht, weniger große Belastungen auf, als in den Bereichen, auf denen die Sitzbeinhöcker des Fahrers aufliegen.

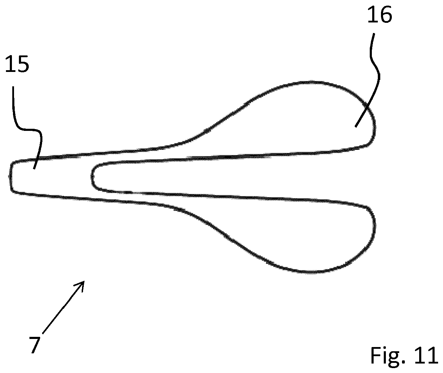

Fig. 11 zeigt das für den Sattel verwendete Bauteil aus einem Verbundwerkstoff 7 in einer Draufsicht.

Das Bauteil umfasst einen vorderen Bereich 15, von welchem ausgehend sich das Bauteil zu einem hinteren Bereich 16 aufgabelt.

Durch die Erfindung konnte auf einfache Weise ein äußerst leichter Sattel bereitgestellt werden.

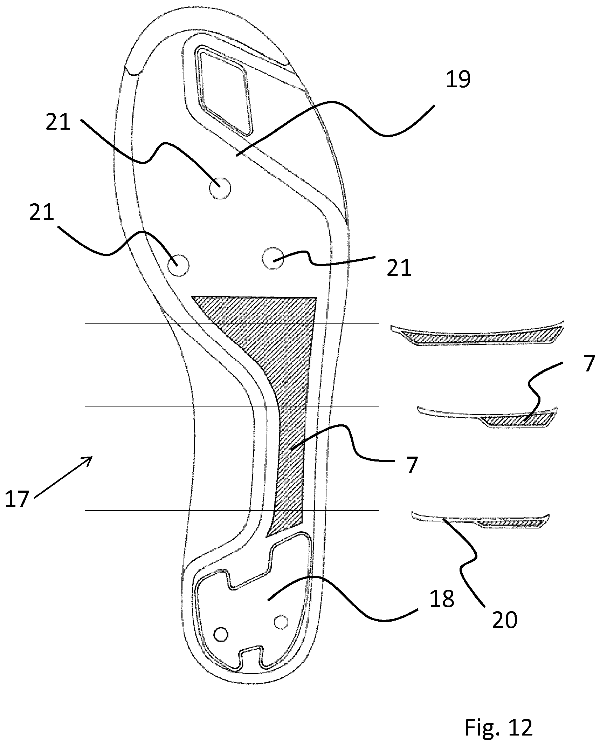

Fig. 12 zeigt eine schematische Ansicht von unten auf einen Fahrradschuh 17.

Auf der rechten Seite der Fig. 12 sind neben den Linien die entsprechenden Schnittansichten dargestellt.

Der Fahrradschuh 17 weist eine Sohle auf, die mit einem Verbundwerkstoff 7 verstärkt ist.

Der Verbundwerkstoff 7 befindet sich zwischen einem Vorderfußbereich 19 und einem Fersenbereich 18.

In diesem Bereich, welcher teilweise vom Quergewölbe des Fußes überspannt wird, verschmälert sich die Sohle.

Der Verbundwerkstoff 7 verstärkt diesen schmalen Bereich und verbreitert sich in Richtung des Vorderfußbereiches 19. Hergestellt wurde die Sohle, indem der Verbundwerkstoff 7 mit einem Elastomer 20 umspritzt wurde.

Die Schuhsohle wird mithin durch das Elastomer 20 und den Verbundwerkstoff 7 gebildet.

Im Vorderfußbereich 19, in welchem in diesem Ausführungsbeispiel die Sohle nicht mit einem Verbundwerkstoff verstärkt ist, befinden sich Halterungselemente zum Befestigen des Fahrradschuhs 17 an einer Pedale.

Neben dem realisierten geringen Gewicht ist von Vorteil, dass der Fahrradschuh 17 weniger zu Torsionen neigt, da insbesondere ein schmaler mittlerer Bereich der Sohle durch das Bauteil aus Verbundwerkstoff 7 verstärkt ist.

### Bezugszeichenliste

- 1: Leichtgewichtsstruktur
- 2: Hohlkammer
- 3: Faserverbundmatte
- 4: Walze
- 5: Faserverbundmatte
- 6: Halbzeug
- 7: Verbundwerkstoff
- 8: Sattel
- 9: Halter
- 10: Bezug
- 11: hintere Halteraufnahme
- 12: vordere Halteraufnahme
- 13: Thermoplast
- 14: Thermoplast
- 15: vorderer Bereich
- 16: hinterer Bereich
- 17: Fahrradschuh
- 18: Fersenbereich
- 19: Vorderfußbereich
- 20: Thermoplast
- 21: Halterungselement

## Patentansprüche

1. Verfahren zum Herstellen eines Bauteils aus einem Verbundwerkstoff,
umfassend die Schritte:
- Bereitstellen einer Hohlkammern (2) umfassenden Leichtgewichtsstruktur (1), welche als Wabenplatte ausgebildet ist;
- Aufbringen einer Mehrzahl von Lagen einer Faserverbundmatte (5), welche mit einem thermoplastischen Material vorimprägniert ist;
- Pressen oder Kalandrieren des entstandenen Verbunds,
wobei aus dem gepressten oder kalandrierten Verbund ein Halbzeug (6) ausgeschnitten oder ausgestanzt wird,
wobei das Halbzeug (6) unter Wärmeeinwirkung tiefgezogen wird, wobei die Leichtgewichtsstruktur (1) verformt wird und durch den abkühlten Thermoplast (13, 14) in Form gehalten wird,
und wobei das Halbzeug (6) nach dem Umformen mit einem Thermoplasten (13, 14) hinterspritzt wird, wobei das Halbzeug (6) in einem Werkzeug hinterspitzt wird, welches auch für das Umformen des Halbzeugs verwendet wurde.

2. Verfahren zum Herstellen eines Bauteils nach Anspruch 1, **dadurch gekennzeichnet, dass** das Halbzeug (6) nach dem Umformen mit dem Thermoplasten (13, 14) hinterspritzt wird, um ein erstes und zweites Bauteil miteinander zu verbinden.

3. Verfahren zum Herstellen eines Bauteils aus einem Verbundwerkstoff nach einem der vorstehenden Ansprüche, **dadurch gekennzeichnet, dass** das Halbzeug (6) lackiert wird, insbesondere in dem Werkzeug, welches auch für das Umformen des Halbzeugs verwendet wurde.

4. Verfahren zum Herstellen eines Bauteils aus einem Verbundwerkstoff nach einem der vorstehenden Ansprüche, **dadurch gekennzeichnet, dass** eine Mehrzahl von Lagen von Faserverbundmatten (5) in unterschiedlicher Orientierung zueinander aufgebracht werden.

5. Bauteil aus einem Verbundwerkstoff, hergestellt mit einem Verfahren nach einem der vorstehenden Ansprüche.

## Claims

1. A method for producing a component made of composite material, comprising the steps of:
- providing a light-weight structure (1) comprising hollow chambers (2) and being configured as a honeycomb panel,
- applying a plurality of layers of a fiber-reinforced composite mat (5) which is pre-impregnated with a thermoplastic material,
- pressing or calendering the composite generated,
wherein a semi-finished product (6) is cut or stamped out of the pressed or calendered composite,
wherein the semi-finished product (6) is deep-drawn under the influence of heat, wherein the light-weight structure (1) is deformed and its shape maintained by the cooled thermoplast (13, 14),
and wherein the semi-finished product (6), after having been deformed, is back-injection-molded with a thermoplast (13, 14),
wherein the semi-finished product (6) is back-injection-molded in a die which was also used for deforming the semi-finished product.

2. The method for producing a component according to Claim 1, **characterized in that**, after having been deformed, the semi-finished product (6) is back-injection-molded with the thermoplast (13, 14) to connect a first and a second component to each other.

3. The method for producing a component made of composite material according to any one of the preceding claims, **characterized in that** the semi-finished product (6) is painted, more particularly in the die which was also used for deforming the semi-finished product.

4. The method for producing a component made of composite material according to any one of the preceding claims, **characterized in that** a plurality of layers of fiber-reinforced composite mats (5) are applied in different orientations in relation to each other.

5. A component made of composite material, produced using a method according to any one of the preceding claims.

## Revendications

1. Procédé de fabrication d'un composant en un matériau composite, comprenant les étapes de :
- mise à disposition d'une structure de poids léger (1) comprenant des chambres creuses (2) qui est réalisée en tant que plaque à nid d'abeilles ;
- application d'une pluralité de couches d'un mat de composite fibreux (5) qui est imprégné au préalable d'un matériau thermoplastique ;
- estampage ou laminage du composite résultant,
dans lequel un demi-produit (6) est découpé ou découpé à la matrice du composite estampé ou laminé,
dans lequel le demi-produit (6) est embouti sous l'action de la chaleur, dans lequel la structure de poids léger (1) est déformée et est maintenue en forme par le thermoplaste refroidi (13, 14),
et dans lequel le demi-produit (6) est moulé par injection avec un thermoplaste (13, 14) après le façonnage,
dans lequel le demi-produit (6) est moulé par injection dans un outil qui a également été utilisé pour le façonnage du demi-produit.

2. Procédé de fabrication d'un composant selon la revendication 1, **caractérisé en ce que** le demi-produit (6) est moulé par injection avec le thermoplaste (13, 14) après le façonnage pour connecter l'un à l'autre un premier et un second composants.

3. Procédé de fabrication d'un composant en un matériau composite selon une des revendications précédentes, **caractérisé en ce que** le demi-produit (6) est verni, notamment dans l'outil qui a également été utilisé pour le façonnage du demi-produit.

4. Procédé de fabrication d'un composant en un matériau composite selon une des revendications précédentes, **caractérisé en ce qu'**une pluralité de couches de mats de composite fibreux (5) sont appliquées dans une orientation différente les unes des autres.

5. Composant en un matériau composite, fabriqué avec un procédé selon une des revendications précédentes.
